# EUROPEAN PATENT SPECIFICATION

(11) **EP 3 418 885 B1**
(45) Date of publication and mention of the grant of the patent: **24.04.2024**
(21) Application number: 18177838.2
(22) Date of filing: 14.06.2018
(51) Int. Cl.: G06F 8/20

(54) **METHOD AND DEVICE FOR CALLING SOFTWARE DEVELOPMENT KIT**
VERFAHREN UND VORRICHTUNG ZUM AUFRUFEN EINES SOFTWARE-ENTWICKLUNGSKITS
PROCÉDÉ ET DISPOSITIF POUR APPELER UN KIT DE DÉVELOPPEMENT DE LOGICIEL

(30) Priority: 14.06.2017 CN 201710448243
(43) Date of publication of application: 26.12.2018
(73) Proprietor: Beijing Xiaomi Mobile Software Co., Ltd., Beijing 100085 (CN)
(72) Inventor: CHEN, Yinli, Haidian District, Beijing 1000085 (CN); TONG, Wei, Haidian District, Beijing 100085 (CN); DONG, Hongguang, Haidian District, Beijing 100085 (CN); YANG, Liang, Haidian District, Beijing 100085 (CN); CHEN, Shun, Haidian District, Beijing 100085 (CN)
(74) Representative: Dewhurst, Joseph Michael

(56) References cited:
- EP-A1- 1 475 721
- WO-A1-2011/147918
- US-A1- 2007 150 741
- US-A1- 2012 216 244

## Description

### TECHNICAL FIELD

The present disclosure relates to the terminal technologies, and more particularly, to a method for calling a software development kit, a device for calling a software development kit, an electronic device and a computer-readable storage medium.

### BACKGROUND

When an application in an electronic device calls a Software Development Kit (SDK) of a third-party application, the third-party application needs to verify the application.

Generally, the software development kit of the third-party application obtains data relating to the application to perform verification. However, in some cases, the software development kit of the third-party application cannot obtain the data relating to the application during the verification, thereby resulting in failed verification. As a result, the calling of the software development kit of the third-party cannot be completed.

US 2007/150741 A1 discloses a method for performing service eligibility for tracking operations utilized by mobile device, and involves verifying whether a mobile device identifier is associated with registration for a service by an apparatus responsive to the mobile device ID for a mobile device, of a user. Predetermined user information associated with the mobile device ID is determined for providing the service in an event that the mobile device ID is registered with the service. Details of the transaction associated with the identifier are transmitted to a remote system. WO 2011/147918 discloses an eligibility and validation method and apparatus.

### SUMMARY

The present disclosure provides a method for calling a software development kit, a device for calling a software development kit, an electronic device and a computer-readable storage medium, which are capable of overcoming deficiencies in related arts.

According to a first aspect of the embodiments of the present disclosure, there is provided a method for calling a software development kit as claimed in claim 1.

According to an exemplary embodiment, the method further includes:
registering into the system a component which is required for the software development kit to respond to the target application; and
after receiving a running instruction from the system, enabling the component to run so that a response which is made by the software development kit to the target application is transmitted to the target application by the component.

According to an exemplary embodiment, the registering into the system a component which is required for the software development kit to respond to the target application, includes:
when registering the metadata into the system, registering the component into the system.

According to an exemplary embodiment, prior to receiving of the preset instruction, the method further includes:
receiving a custom instruction; and
customizing the metadata of the target application according to the custom instruction.

According to a second aspect of embodiments of the present disclosure, there is provided a device for calling a software development kit as claimed in claim 6.

According to an exemplary embodiment, the device further includes:
a component registering module configured to register into the system a component which is required for the software development kit to respond to the target application; and
a triggering module configured to, after a running instruction is received from the system, enable the component to run so that a response which is made by the software development kit to the target application is transmitted to the target application by the component.

According to an exemplary embodiment, when the metadata registering module registers the metadata into the system which the platform resides in, the component registering module registers the component into the system.

According to an exemplary embodiment, the device further includes:
a receiving module configured to receive a custom instruction; and
a customization module configured to customize the metadata of the target application according to the custom instruction.

According to a third aspect of embodiments of the present disclosure, there is provided an electronic device, including:
a processor; and
a memory for storing instructions executable by the processor;
wherein the processor is configured to perform the method described above.

According to a fourth aspect of embodiments of the present disclosure, there is provided a computer-readable storage medium as claimed in claim 10.

The technical solutions provided by embodiments of the present disclosure can have the following advantageous effects:
As can be seen from the above embodiments, depending on varying software development kits of third-party applications and varying target applications, metadata which is required for the software development kits of the third-party applications to verify the target applications is determined, and the determined metadata is registered into a system where a platform is in. The technical solutions of the present disclosure can ensure that the software development kits of the third-party applications can obtain, from the system, the metadata which is required for verification according to identification information to perform verification and thus the software development kits of the third-party applications can be smoothly called.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart schematically showing a method for calling a software development kit according to an exemplary embodiment.
Fig. 2 is a flow chart schematically showing a method for calling a software development kit according to another exemplary embodiment.
Fig. 3 is a flow chart schematically showing a method for calling a software development kit according to another exemplary embodiment.
Fig. 4 is a flow chart schematically showing a method for calling a software development kit according to another exemplary embodiment.
Fig. 5 is a block diagram schematically showing a device for calling a software development kit according to another exemplary embodiment.
Fig. 6 is a block diagram schematically showing a device for calling a software development kit according to another exemplary embodiment.
Fig. 7 is a block diagram schematically showing a device for calling a software development kit according to another exemplary embodiment.
Fig. 8 is a block diagram schematically showing a device for calling a software development kit according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terminology used in the present disclosure is for the purpose of describing exemplary examples only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," and the like may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if' may be understood to mean "when" or "upon" or "in response to" depending on the context.

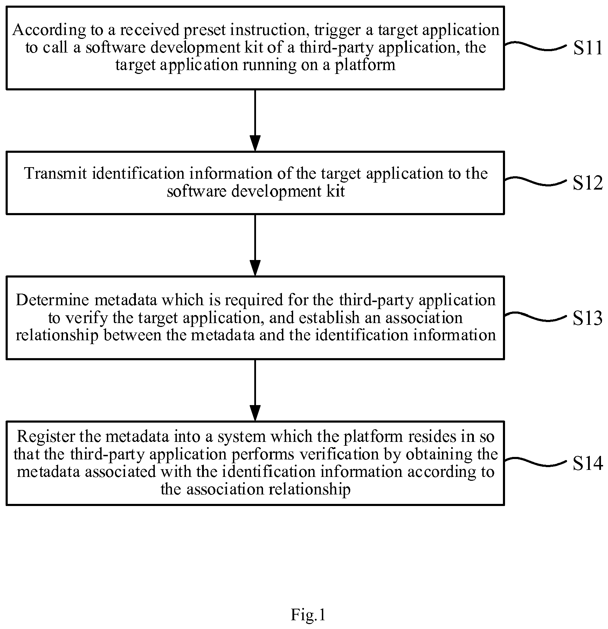

Fig. 1 is a flow chart schematically showing a method for calling a software development kit according to an exemplary embodiment. The method is applied in a platform installed in a system. The system is an operating system of an electronic device such as a terminal, a tablet and the like. As shown in Fig. 1, the method may include the following steps.

In step S11, according to a received preset instruction, a target application is triggered to call a software development kit of a third-party application. The target application runs on the platform.

In an embodiment, applications (including the target application) may run on the platform. The platform provides a running environment for the applications. Further, the platform itself may be an application. On the interface of the platform, identifiers of applications running on the platform can be displayed for users operation.

Sometimes, the platform may be a software platform. A software platform may be a software environment that is used to write applications and run them. It may include software tools such as GUI builders, compilers, class libraries and utilities for developing the applications, as well as a runtime engine for executing the applications, because they are not able to run on their own.

In an embodiment, for applications which may run on the platform, if a user needs to use a new application, he or she may tap or click a particular link on a web page, or tap or click an icon of the application on the interface of the platform, to trigger the platform to download data relating to the application and install the download data into a process of the platform. The download and installation can be performed at the background. During this procedure, the user does not need to select to download or install, and he or she only needs to perform a tap or click operation to run the application.

In an embodiment, the preset instruction and the third-party application may vary depending on the services provided by the target application. For example, if the target application is a foodservice type application, the present instruction may be a payment instruction and the third-party application may be a payment application. By calling the software development kit of the third-party application, payment can be performed for an order in the foodservice type application. As another example, if the target application is a photographing application, the preset instruction may be a sharing instruction and the third-party application may be a social application. By calling the software development kit of the third-party application, the pictures in the photographing application can be shared.

In step S12, identification information of the target application is transmitted to the software development kit.

In an embodiment, when the user runs the target applications, the identification information can be determined according to the identifier of the target application which is triggered to run, and then the identification information of the target application can be transmitted to the software development kit. The identification information may be data which can be used to determine the identity of the target application, for example, the name or signature of the target application.

In step S13, metadata which is required for the third-party application to verify the target application is determined, and an association relationship between the metadata and the identification information is established.

In step S14, the metadata is registered into a system where the platform is in so that the third-party application performs verification by obtaining the metadata associated with the identification information according to the association relationship.

In an embodiment, when an application calls a software development kit of a third-party application, the software development kit of the third-party may verify the application (i.e., the target application) which initiates the calling. The verification involves obtaining of metadata registered in the system by the application. For different target applications and software development kits of different third-party applications, the metadata which needs to be obtained for verification is different. For example, if a foodservice application calls a software development kit corresponding to a payment function of a payment application, the metadata which is required for verification may include the name, the signature or the version information of the kit. If the software development kit corresponding to a sharing function of a photographing application needs to be called, the metadata which is required for verification may include the name and the signature of the kit.

The target application in the embodiments of the present disclosure may be not directly installed in the system or directly run in the system, but run on the platform and thus the metadata of the target application is not registered in the system. Accordingly, depending on software development kits of varying third-party applications and varying target applications, the metadata which is required for the software development kits of the third-party application to verify the target applications can be determined, and the determined metadata can be registered in the system which the platform resides in. This can ensure that the software development kits of the third-party applications can obtain, from the system, the metadata which is required for verification according to identification information to perform verification and thus the software development kits of the third-party applications can be smoothly called.

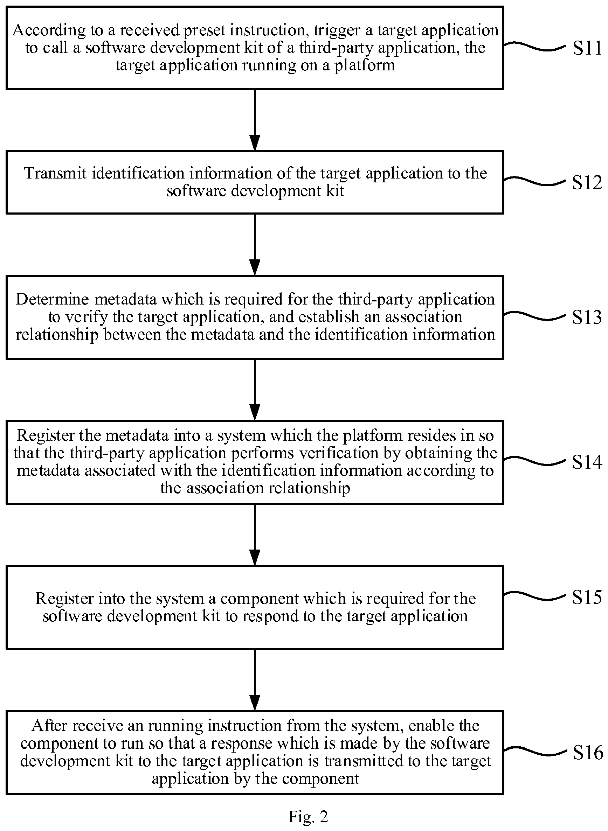

Fig. 2 is a flow chart schematically showing a method for calling a software development kit according to another exemplary embodiment. As shown in Fig. 2, on the basis of the embodiments described with reference to Fig. 1, the method may further include the following steps.

In step S15, a component which is required for the software development kit to respond to the target application is registered into the system.

In step S16, after receiving an running instruction from the system, the component runs so that a response which is made by the software development kit to the target application is transmitted to the target application by the component.

In an embodiment, if the target application passes the verification performed by the software development kit of the third-party application, the software development kit of the third-party responds to the target application. To respond, a component is needed to transmit the response to the target application, so that the target application can know that the software development kit of the third-party application has responded to the calling. The target application in embodiments of the present disclosure may be not directly installed in the system, but may run on the platform, and thus the component which forwards the response to the target application is not registered in the system.

Thus, the component which is needed to transmit the response which is made by the software development kit of the third-party application to the target application may be registered into the system. This can ensure that when the system receives from the software development kit a request for calling a corresponding component, the existence of the component and the position where the component is located can be determined according to the registered information, thereby triggering the platform to enable the component to run. In this way, the response made by the software development kit to the target application can be transmitted to the target application by the component, so that the target application can know that the software development kit of the third-party application which the target application calls has responded. Thus, the whole calling procedure is completed.

In an embodiment, depending on varying target applications and software development kits of varying third-party applications, the plug which is used to forward the response made by the software development kit of the third-party applications to the target applications can be different. For example, in Android, the component may be the Activity component or the Service component, or other components to name a few. Specific component can be determined according to actual situations.

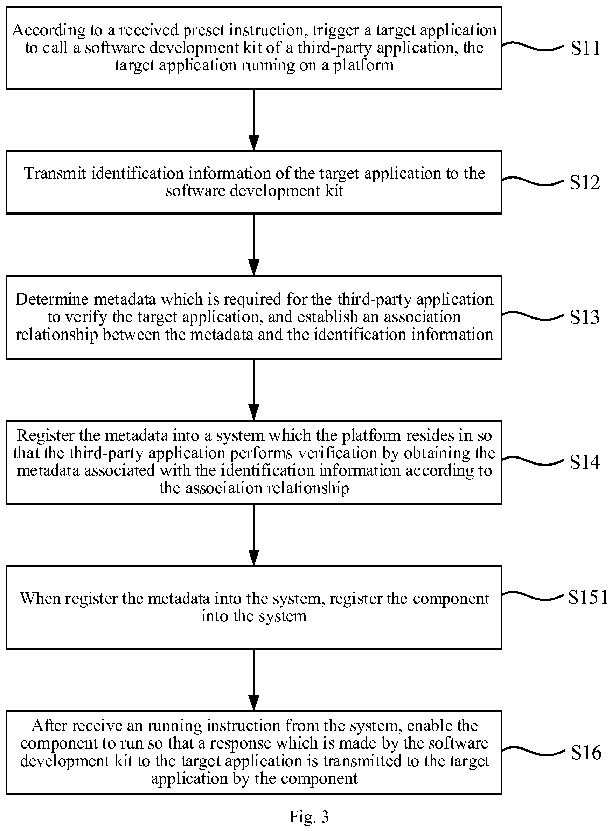

Fig. 3 is a flow chart schematically showing a method for calling a software development kit according to an exemplary embodiment. As shown in Fig. 3, on the basis of the embodiments shown in Fig. 2, the step of registering into the system a component which is required for the software development kit to respond to the target application includes the following step S151.

In step S151, when registering the metadata into the system, the component is registered into the system.

In an embodiment, when the metadata is registered into the system which the platform resides in, the component is also registered into the system. In this way, the registrations can be performed together, thereby simplifying the operations during the calling procedure.

In an embodiment, the metadata and component may be stored in a process in the platform or a process in the system.

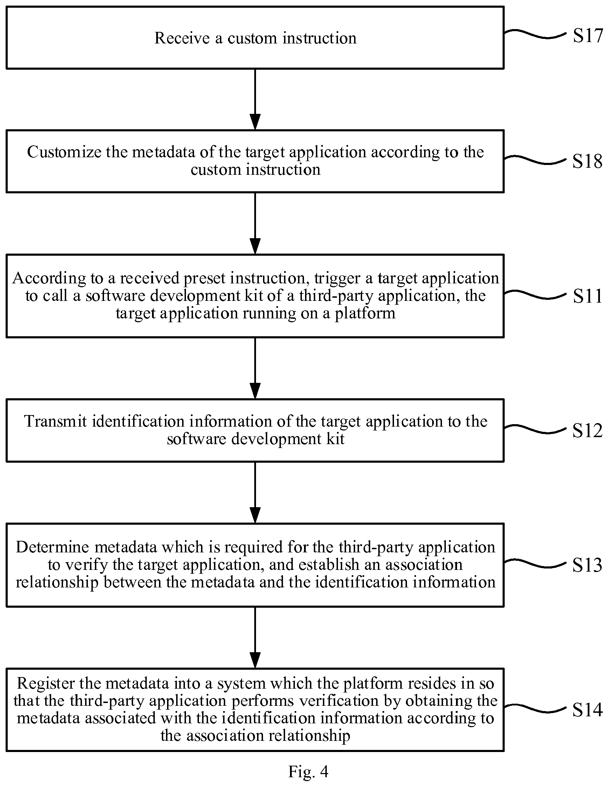

Fig. 4 is a flow chart schematically showing a method for calling a software development kit according to another exemplary embodiment. As shown in Fig. 4, on the basis of the embodiment described with reference to Fig. 1, prior to the receiving of the preset instruction, the method further includes the following steps.

In step S17, a custom instruction is received.

In step S18, the metadata of the target application is customized according to the custom instruction.

In an embodiment, the metadata which is needed for the software development kits of different third-party applications to verify the target applications may be different, and thus the platform may provide a function for customizing the metadata, so that the users or software engineers responsible for debugging may input a custom instruction and the metadata of the target application may be customized according to the custom instruction. The number, type or value of the metadata of the target application can be customized to ensure that the requirements when the software development kits of different third-party applications verify the target application can be met, and that the software development kits of the third-party applications can be successfully called.

The following provides exemplary descriptions about the main steps performed in the above embodiments as a whole.

In an embodiment, when a user calls a function of a third-party application using a target application running in the above-described platform, this triggers the target application to call the software development kit of the third-party application. For example, if the target application is a foodservice type application and the third-party application is a payment application, when the foodservice type application calls the payment function of the payment application, this triggers the foodservice type application to call the software development kit of the corresponding payment in the payment application.

The software development kit needs to verify the target application to confirm whether to allow the target application. Generally, the software development kit verifies the target application by obtaining some metadata of the target application from the system which the target application resides in. However, in the embodiments of the present disclosure, the target application is not directly installed in the system and does not directly run in the system, but runs on the platform, and the metadata of the target application is not registered in the system.

Thus, on the one hand, the identification information of the target application can be transmitted to the software development kit of the third-party application, and on the other hand the metadata which is needed for the software development kit of the third-party application to verify the target application can be determined according to the software development kit and the target application, and the determined metadata can be registered into the system. In this way, when the software development kit of the third-party application performs verification, the software development kit may, according to the received identification information, inquire the registered information about the metadata of the target application which is related to the identification information, and confirm that the metadata which is needed for the verification exists and thereby allow the calling.

After the verification is passed, the software development kit of the third-party application also needs to respond to the target application. Generally, the response is transmitted to the target application by a component. However, in the embodiments of the present disclosure, the target application is not directly installed in the system and does not directly run in the system, but runs on the platform, and the component is not registered in the system.

Thus, the component which is needed for the software development kit of the third-party application to respond to the target application can be registered into the system. In this way, when the software development kit of the third-party application sends a request for calling a component, the system can confirm that the component exists according to the registered information, and trigger the platform to enable the component to run. As such, the response made by the software development kit to the target application is transmitted to the target application by the component, and thereby the whole calling procedure is completed.

In correspondence to the embodiments of the methods for calling a software development kit as described above, the present disclosure also provide embodiments of the devices for calling a software development kit.

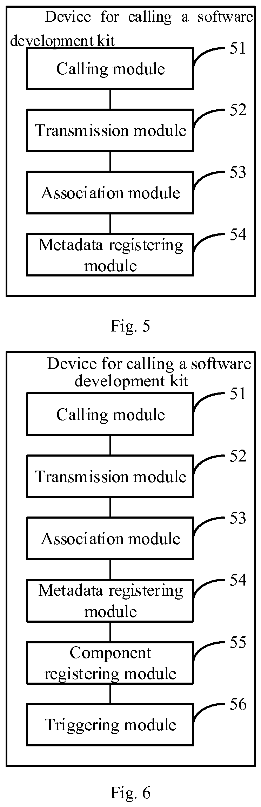

Fig. 5 is a block diagram schematically showing a device for calling a software development kit according to an exemplary embodiment. As shown in Fig. 5, the device may include a calling module 51, a transmission module 52, an association module 53 and a metadata registering module 54.

The calling module 51 is configured to, according to a received preset instruction, trigger a target application to call a software development kit of a third-party application, wherein the target application runs on the platform.

The transmission module 52 is configured to transmit identification information of the target application to the software development kit.

The association module 53 is configured to determine metadata which is required for the third-party application to verify the target application, and establish an association relationship between the metadata and the identification information.

The metadata registering module 54 is configured to register the metadata into a system where the platform is in so that the third-party application performs verification by obtaining the metadata associated with the identification information according to the association relationship.

Fig. 6 is a block diagram schematically showing a device for calling a software development kit according to another exemplary embodiment. As shown in Fig. 6, on the basis of the embodiment described with reference to Fig. 5, the device further includes a component registering module 55 and a triggering module 56.

The component registering module 55 is configured to register into the system a component which is required for the software development kit to respond to the target application.

The triggering module 56 is configured to, after an running instruction is received from the system, enable the component to run so that a response which is made by the software development kit to the target application is transmitted to the target application by the component.

According to an exemplary embodiment, when the metadata registering module registers the metadata into the system which the platform resides in, the component registering module registers the component into the system.

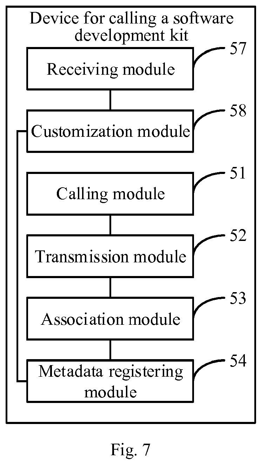

Fig. 7 is a block diagram schematically showing a device for calling a software development kit according to another exemplary embodiment. As shown in Fig. 7, on the basis of the embodiment described with reference to Fig. 5, the device further includes a receiving module 57 and a customization module 58.

The receiving module 57 is configured to receive a custom instruction.

The customization module 58 is configured to customize the metadata of the target application according to the custom instruction.

Details about the operations performed by individual modules in the embodiments of the devices can be found in the descriptions about the embodiments of the methods and repeated descriptions are omitted.

For the device embodiments, since they substantially correspond to the method embodiments, reference can be made to the description of the method embodiments. The embodiments described above are merely illustrative, the modules described as separate components may be physically separated or not, and the components shown as modules may be physical modules or not, i.e., these modules can be disposed in the same place, or may be distributed over a plurality of network modules. A part or all of the modules may be selected according to actual needs to achieve the purpose of the present disclosure. One of ordinary skill in the art will understand and practice the present disclosure without paying creative work.

The present disclosure further provides a device for calling a software development kit. The device includes: a processor; and a memory for storing instructions executable by the processor. The processor is configured to: according to a received preset instruction, trigger a target application to call a software development kit of a third-party application, wherein the target application runs on a platform; transmit identification information of the target application to the software development kit; determine metadata which is required for the third-party application to verify the target application, and establish an association relationship between the metadata and the identification information; and register the metadata into a system where the platform is in so that the third-party application performs verification by obtaining the metadata associated with the identification information according to the association relationship.

The present disclosure also provides a terminal which includes a memory and one or more programs. The one or more programs are stored in the memory, and after being configured, one or more processors cause one or more programs to perform the following steps: according to a received preset instruction, triggering a target application to call a software development kit of a third-party application, wherein the target application runs on the platform; transmitting identification information of the target application to the software development kit; determining metadata which is required for the third-party application to verify the target application, and establishing an association relationship between the metadata and the identification information; and registering the metadata into a system where the platform is in so that the third-party application performs verification by obtaining the metadata associated with the identification information according to the association relationship.

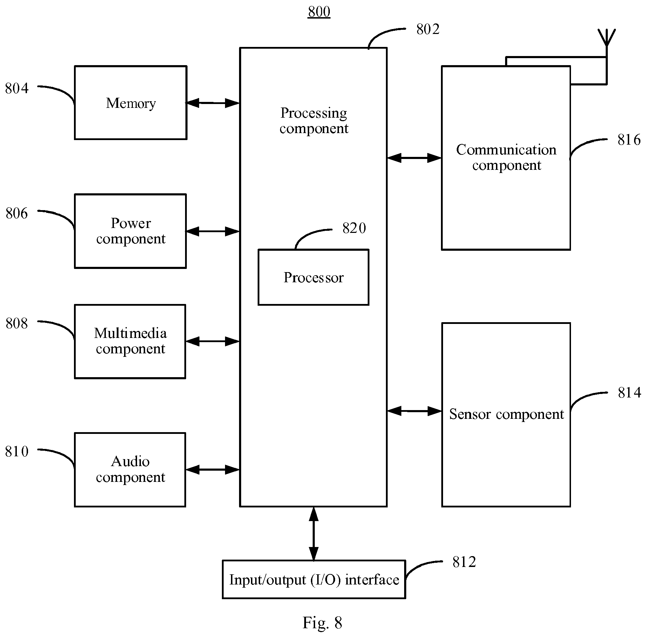

Fig. 8 is a block diagram of a device 800 for calling a software development kit according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions, the above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

The present disclosure may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the computing system disclosed may encompass software, firmware, and hardware implementations. The terms "module," "sub-module," "circuit," "sub-circuit," "circuitry," "sub-circuitry," "unit," or "sub-unit" may include memory (shared, dedicated, or group) that stores code or instructions that can be executed by one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for calling a software development kit, applied in a platform, wherein the method comprises:
according to a received preset instruction, triggering (S11) a target application to call a function of a software development kit of a third-party application, wherein the target application runs on the platform which is installed in an operating system of an electronic device, wherein the platform provides a running environment for applications which comprise the target application, and identifiers of applications running on the platform are displayed on an interface of the platform, and a user's tap or click on an icon of the target application on the interface of the platform triggers the platform to download data relating to the target application and install the download data into a process of the platform, and download and installation can be performed at the background;
transmitting (S12) identification information of the target application to the software development kit;
determining (S13) metadata which is required for the third-party application to verify the target application, and establishing an association relationship between the metadata and the identification information; and
registering (S14) the metadata into the operating system in which the platform is installed so that the third-party application can verify the target application by obtaining the metadata from the operating system according to the association relationship;
wherein the method further comprises:
registering (S15) into the operating system a component which is required for the software development kit to respond to the target application; and
after receiving a running instruction from the operating system, executing (S16) the component so that a response which is made by the software development kit to the target application is transmitted to the target application via the component;
wherein registering into the operating system the component which is required for the software development kit to respond to the target application, comprises:
when registering the metadata into the operating system, registering (S151) the component into the operating system.

2. The method according to claim 1, further comprising:
the third-party application verifying the target application by obtaining the metadata from the operating system according to the association relationship and the identification information.

3. The method according to any one of claims 1 to 2, wherein prior to receiving of the preset instruction, the method further comprises:
receiving (S17) a custom instruction; and
customizing (S18) the metadata of the target application according to the custom instruction.

4. A device for calling a software development kit, wherein the device comprises:
a calling module (51) configured to, according to a received preset instruction, trigger a target application to call a function of a software development kit of a third-party application, wherein the target application runs on a platform which is installed in an operating system of an electronic device, the platform provides a running environment for applications which comprise the target application, and identifiers of applications running on the platform are displayed on an interface of the platform, and a user's tap or click an icon of the target application on the interface of the platform triggers the platform to download data relating to the target application and install the download data into a process of the platform, and download and installation can be performed at the background;
a transmission module (52) configured to transmit identification information of the target application to the software development kit;
an association module (53) configured to determine metadata which is required for the third-party application to verify the target application, and establish an association relationship between the metadata and the identification information; and
a metadata registering module (54) configured to register the metadata into the operating system in which the platform is installed so that the third-party application can verify the target application by obtaining the metadata from the operating system according to the association relationship;
a component registering module (55) configured to register into the operating system a component which is required for the software development kit to respond to the target application; and
a triggering module (56) configured to, after a running instruction is received from the operating system, execute the component so that a response which is made by the software development kit to the target application is transmitted to the target application by the component.
wherein when the metadata registering module registers the metadata into the operating system, the component registering module registers the component into the operating system.

5. The device according to claim 4, further comprising:
a receiving module (57) configured to receive a custom instruction; and
a customization module (58) configured to customize the metadata of the target application according to the custom instruction.

6. A non-transitory computer-readable storage medium having stored therein computer programs that, when executed by a processor, cause the processor to implement the method according to any one of claims 1 to 3.

## Patentansprüche

1. Verfahren zum Aufrufen eines Softwareentwicklungskits, das in einer Plattform angewendet wird, wobei das Verfahren umfasst:
gemäß einer empfangenen voreingestellten Anweisung, Auslösen (S11) einer Zielanwendung zum Aufrufen einer Funktion eines Softwareentwicklungskits einer Drittanbieteranwendung, wobei die Zielanwendung auf der Plattform ausgeführt wird, die in einem Betriebssystem einer elektronischen Vorrichtung installiert ist, wobei die Plattform eine Ausführungsumgebung für Anwendungen bereitstellt, die die Zielanwendung umfassen, und Kennungen von Anwendungen, die auf der Plattform ausgeführt werden, auf einer Schnittstelle der Plattform angezeigt werden, und ein Antippen oder Anklicken eines Symbols der Zielanwendung auf der Schnittstelle der Plattform durch einen Benutzer auslöst, dass die Plattform Daten, die sich auf die Zielanwendung beziehen, herunterlädt und die heruntergeladenen Daten in einen Prozess der Plattform installiert, und das Herunterladen und die Installation im Hintergrund durchgeführt werden können;
Übertragen (S12) von Identifikationsinformationen der Zielanwendung an das Softwareentwicklungskit;
Bestimmen (S13) von Metadaten, die für die Drittanbieteranwendung erforderlich sind, um die Zielanwendung zu verifizieren, und Herstellen einer Zuordnungsbeziehung zwischen den Metadaten und den Identifikationsinformationen; und
Registrieren (S14) der Metadaten in das Betriebssystem, in dem die Plattform installiert ist, sodass die Drittanbieteranwendung die Zielanwendung durch Erhalten der Metadaten von dem Betriebssystem gemäß der Zuordnungsbeziehung verifizieren kann;
wobei das Verfahren weiter umfasst:
Registrieren (S15) einer Komponente in das Betriebssystem, die erforderlich ist, damit das Softwareentwicklungskit auf die Zielanwendung reagiert; und
nach Empfangen einer Ausführungsanweisung vom Betriebssystem, Ausführen (S16) der Komponente, sodass eine Antwort, die von dem Softwareentwicklungskit an die Zielanwendung erfolgt, über die Komponente an die Zielanwendung übertragen wird;
wobei das Registrieren der Komponente in das Betriebssystem, die erforderlich ist, damit das Softwareentwicklungskit auf die Zielanwendung reagiert, umfasst:
beim Registrieren der Metadaten in das Betriebssystem, Registrieren (S151) der Komponente in das Betriebssystem.

2. Verfahren nach Anspruch 1, weiter umfassend:
Verifizieren der Zielanwendung durch die Drittanbieteranwendung, indem sie die Metadaten vom Betriebssystem gemäß der Zuordnungsbeziehung und den Identifikationsinformationen erhält.

3. Verfahren nach einem der Ansprüche 1 bis 2, wobei das Verfahren vor Empfangen der voreingestellten Anweisung weiter umfasst:
Empfangen (S17) einer benutzerdefinierten Anweisung; und
Anpassen (S18) der Metadaten der Zielanwendung gemäß der benutzerdefinierten Anweisung.

4. Vorrichtung zum Aufrufen eines Softwareentwicklungskits, wobei die Vorrichtung umfasst:
ein Aufrufmodul (51), das dazu konfiguriert ist, gemäß einer empfangenen voreingestellten Anweisung eine Zielanwendung auszulösen, um eine Funktion eines Softwareentwicklungskits einer Drittanbieteranwendung aufzurufen, wobei die Zielanwendung auf einer Plattform ausgeführt wird, die in einem Betriebssystem einer elektronischen Vorrichtung installiert ist, wobei die Plattform eine Ausführungsumgebung für Anwendungen bereitstellt, die die Zielanwendung umfassen, und Kennungen von Anwendungen, die auf der Plattform ausgeführt werden, auf einer Schnittstelle der Plattform angezeigt werden, und ein Antippen oder Anklicken eines Symbols der Zielanwendung auf der Schnittstelle der Plattform durch einen Benutzer auslöst, dass die Plattform Daten, die sich auf die Zielanwendung beziehen, herunterlädt und die heruntergeladenen Daten in einen Prozess der Plattform installiert, und das Herunterladen und die Installation im Hintergrund durchgeführt werden können;
ein Übertragungsmodul (52), das dazu konfiguriert ist, Identifikationsinformationen der Zielanwendung an das Softwareentwicklungskit zu übertragen;
ein Zuordnungsmodul (53), das dazu konfiguriert ist, Metadaten zu bestimmen, die für die Drittanbieteranwendung erforderlich sind, um die Zielanwendung zu verifizieren, und eine Zuordnungsbeziehung zwischen den Metadaten und den Identifikationsinformationen herzustellen; und
ein Metadaten-Registrierungsmodul (54), das dazu konfiguriert ist, die Metadaten in das Betriebssystem zu registrieren, in dem die Plattform installiert ist, sodass die Drittanbieteranwendung die Zielanwendung durch Erhalten der Metadaten von dem Betriebssystem gemäß der Zuordnungsbeziehung verifizieren kann;
ein Komponenten-Registrierungsmodul (55), das dazu konfiguriert ist, eine Komponente in das Betriebssystem zu registrieren, die erforderlich ist, damit das Softwareentwicklungskit auf die Zielanwendung reagiert; und
ein Auslösemodul (56), das dazu konfiguriert ist, nach Empfangen einer Ausführungsanweisung von dem Betriebssystem die Komponente auszuführen, sodass eine Antwort, die von dem Softwareentwicklungskit an die Zielanwendung erfolgt, von der Komponente an die Zielanwendung übertragen wird.
wobei, wenn das Metadaten-Registrierungsmodul die Metadaten in das Betriebssystem registriert, das Komponenten-Registrierungsmodul die Komponente in das Betriebssystem registriert.

5. Vorrichtung nach Anspruch 4, weiter umfassend:
ein Empfangsmodul (57), das zum Empfangen einer benutzerdefinierten Anweisung konfiguriert ist; und
ein Anpassungsmodul (58), das dazu konfiguriert ist, die Metadaten der Zielanwendung gemäß der benutzerdefinierten Anweisung anzupassen.

6. Nicht-transitorisches computerlesbares Speichermedium, auf dem Computerprogramme gespeichert sind, die, wenn sie von einem Prozessor ausgeführt werden, den Prozessor veranlassen, das Verfahren nach einem der Ansprüche 1 bis 3 zu implementieren.

## Revendications

1. Procédé pour appeler un kit de développement de logiciel, appliqué dans une plateforme, dans lequel le procédé comprend les étapes consistant à :
selon une instruction prédéfinie reçue, déclencher (S11) une application cible pour appeler une fonction d'un kit de développement de logiciel d'une application tierce, dans lequel l'application cible s'exécute sur la plateforme qui est installée dans un système d'exploitation d'un dispositif électronique, dans lequel la plateforme fournit un environnement d'exécution pour les applications qui comprennent l'application cible, et les identifiants des applications exécutées sur la plateforme sont affichés sur une interface de la plateforme, et le fait qu'un utilisateur appuie ou clique sur une icône de l'application cible sur l'interface de la plateforme, déclenche le téléchargement par la plateforme des données relatives à l'application cible et l'installation des données de téléchargement dans un processus de la plateforme, et le téléchargement et l'installation peuvent être effectués en arrière-plan ;
transmettre (S12) des informations d'identification de l'application cible au kit de développement de logiciel ;
déterminer (S13) des métadonnées qui sont requises pour que l'application tierce vérifie l'application cible, et établir une relation d'association entre les métadonnées et les informations d'identification ; et
enregistrer (S14) les métadonnées dans le système d'exploitation dans lequel la plateforme est installée de telle sorte que l'application tierce puisse vérifier l'application cible en obtenant les métadonnées à partir du système d'exploitation selon la relation d'association ;
dans lequel le procédé comprend en outre les étapes consistant à :
enregistrer (S15) dans le système d'exploitation un composant qui est requis pour que le kit de développement de logiciel réponde à l'application cible ; et
après avoir reçu une instruction d'exécution du système d'exploitation, exécuter (S16) le composant de telle sorte qu'une réponse qui est effectuée par le kit de développement de logiciel à l'application cible soit transmise à l'application cible via le composant ;
dans lequel l'enregistrement dans le système d'exploitation du composant qui est requis pour que le kit de développement de logiciel réponde à l'application cible comprend l'étape consistant à :
lors de l'enregistrement des métadonnées dans le système d'exploitation, enregistrer (S151) le composant dans le système d'exploitation.

2. Procédé selon la revendication 1, comprenant en outre :
la vérification par l'application tierce de l'application cible en obtenant les métadonnées à partir du système d'exploitation en fonction de la relation d'association et des informations d'identification.

3. Procédé selon l'une quelconque des revendications 1 à 2, dans lequel avant la réception de l'instruction prédéfinie, le procédé comprend en outre les étapes consistant à :
recevoir (S17) une instruction personnalisée ; et
personnaliser (S18) les métadonnées de l'application cible selon l'instruction personnalisée.

4. Dispositif pour appeler un kit de développement de logiciel, dans lequel le dispositif comprend :
un module d'appel (51) configuré pour, selon une instruction prédéfinie reçue, une application cible pour appeler une fonction d'un kit de développement de logiciel d'une application tierce, dans lequel l'application cible s'exécute sur une plateforme qui est installée dans un système d'exploitation d'un dispositif électronique, dans lequel la plateforme fournit un environnement d'exécution pour les applications qui comprennent l'application cible, et les identifiants des applications exécutées sur la plateforme sont affichés sur une interface de la plateforme, et le fait qu'un utilisateur appuie ou clique sur une icône de l'application cible sur l'interface de la plateforme, déclenche le téléchargement par la plateforme des données relatives à l'application cible et l'installation des données de téléchargement dans un processus de la plateforme, et le téléchargement et l'installation peuvent être effectués en arrière-plan ;
un module de transmission (52) configuré pour transmettre des informations d'identification de l'application cible au kit de développement de logiciel ;
un module d'association (53) configuré pour déterminer des métadonnées qui sont requises pour que l'application tierce vérifie l'application cible, et établir une relation d'association entre les métadonnées et les informations d'identification ; et
un module d'enregistrement de métadonnées (54) configuré pour enregistrer les métadonnées dans le système d'exploitation dans lequel la plateforme est installée de telle sorte que l'application tierce puisse vérifier l'application cible en obtenant les métadonnées à partir du système d'exploitation selon la relation d'association ;
un module d'enregistrement de composant (55) configuré pour enregistrer dans le système d'exploitation un composant qui est requis pour que le kit de développement de logiciel réponde à l'application cible ; et
un module de déclenchement (56) configuré pour, après qu'une instruction d'exécution ait été reçue à partir du système d'exploitation, exécuter le composant de telle sorte qu'une réponse qui est effectuée par le kit de développement de logiciel à l'application cible soit transmise à l'application cible par le composant ;
dans lequel lorsque le module d'enregistrement de métadonnées enregistre les métadonnées dans le système d'exploitation, le module d'enregistrement de composant enregistre le composant dans le système d'exploitation.

5. Dispositif selon la revendication 4, comprenant en outre :
un module de réception (57), configuré pour recevoir une instruction de personnalisation ; et
un module de personnalisation (58) configuré pour personnaliser les métadonnées de l'application cible selon l'instruction de personnalisation.

6. Support de stockage non transitoire lisible par ordinateur sur lequel est stocké un programme informatique qui, lorsqu'il est exécuté par un processeur, amène le processeur à réaliser le procédé selon l'une quelconque des revendications 1 à 3.
